# EUROPEAN PATENT SPECIFICATION

(11) **EP 3 708 496 B1**
(45) Date of publication and mention of the grant of the patent: **29.11.2023**
(21) Application number: 19290016.5
(22) Date of filing: 15.03.2019
(51) Int. Cl.: B64D 15/12

(54) **BLADE DE-ICING**
SCHAUFELENTEISUNG
DÉGIVRAGE DE LAMES

(43) Date of publication of application: 16.09.2020
(73) Proprietor: Ratier-Figeac SAS, 46101 Figeac Cedex (FR)
(72) Inventor: Picard, Pierre-Alex, 46100 Figeac (FR); Moles, Patrick, 46100 Corn (FR)
(74) Representative: Dehns

(56) References cited:
- EP-A1- 1 873 060
- WO-A1-96/03316
- GB-A- 666 609
- US-A- 5 947 418
- US-A1- 2018 093 785
- US-A1- 2018 215 476

## Description

### TECHNICAL FIELD

The present disclosure relates to blades including for example propeller blades, rotor blades, fan blades wind turbine blades that require de-icing.

### BACKGROUND

It is common in blades that experience low temperatures in use to provide an electrical heater at the leading edge of the blade in order to melt ice that has accumulated on the leading edge.

At present, the electrical heater is typically formed as a one-piece component that comprises a metallic heating foil embedded in an elastomeric matrix. The foil and matrix are cured in a vacuum bag to the appropriate 3D shape that is then bonded to the leading edge of the blade.

This design has several potential drawbacks. For example, the 3D geometry may be difficult to produce, leading to potential high scrappage rates. In addition, it may be difficult accurately to bond the heater on the leading edge due to the softness of the material leading to geometrical discrepancies during bonding In addition, the whole heater must be removed and replaced when there is a defect on just one side of the blade. The cost of the part is high and the matrix material used may age, necessitating replacement.

This disclosure seeks to mitigate at least some of the above potential issues.

WO 96/03316 A1 discloses a blade according to the preamble of claim 1.

US 2018/215476 A1 discloses carbon nanotube anti-icing and de-icing means for aircraft, US 5 947 418 A discloses a device for heating an airfoil, US 2018/093785 A1 discloses embedded aircraft heater repair, GB 666 609 A discloses improvements in or relating to the electric heating of surfaces, and EP 1 873 060 A1 discloses a hybrid electrical ice protection system.

### SUMMARY

In accordance with one aspect of this disclosure, there is provided a blade as set forth in claim 1.

The input and output terminals may each comprise a pair of washers, one washer engaging a first side of a terminal portion of the heating element and the other washer engaging an opposed second side of the terminal portion of the heating element.

The washers may be received in openings provided in the inner and outer layers of the heater part.

In embodiments, the washers may not protrude from the inner and outer layers. Optionally the washers may lie flush with the external surfaces of the inner and outer layers.

The blade may comprise a terminal block provided in the blade body for receiving fasteners extending through the washers.

The terminal block may comprise one or more fastener receivers having a threaded bore for receiving the fastener. The threaded bore may be provided in a threaded insert mounted in the fastener receiver.

The blade may further comprise an erosion resistant layer arranged over the first and second heater parts on the leading edge of the blade body.

The blade may be a propeller blade, a propulsor blade, a fan blade, an open rotor blade or a wind turbine blade.

The inner and outer layers of the heater part may comprise a fibre reinforced composite material or an elastomeric material with a reinforcing backing.

In a further aspect, the disclosure provides a blade heating system comprising a blade in accordance with the disclosure and an electrical power supply connected to the first and second heater parts, the power supply being configured such that one heater part may be energised independently of the other heater part.

The blade heating system may further comprise a control configured such that the electrical power supply to each heater part may be controlled independently.

In a further aspect, the disclosure provides a method of constructing a blade in accordance with the disclosure comprising bonding the first heater part to an external surface of a leading edge portion of the camber side of the blade body and bonding the second heater part to an external surface of a leading edge portion of the face side (6) of the blade body.

### BRIEF DESCRIPTION OF DRAWINGS

Some embodiments of the disclosure will now be described by way of example only, with reference to the accompanying drawings in which:
Figure 1 shows a blade in accordance with the disclosure;
Figure 2 shows a sectional view along line II-II of Figure 1;
Figure 3 shows the heater parts of the blade of Figure 1;

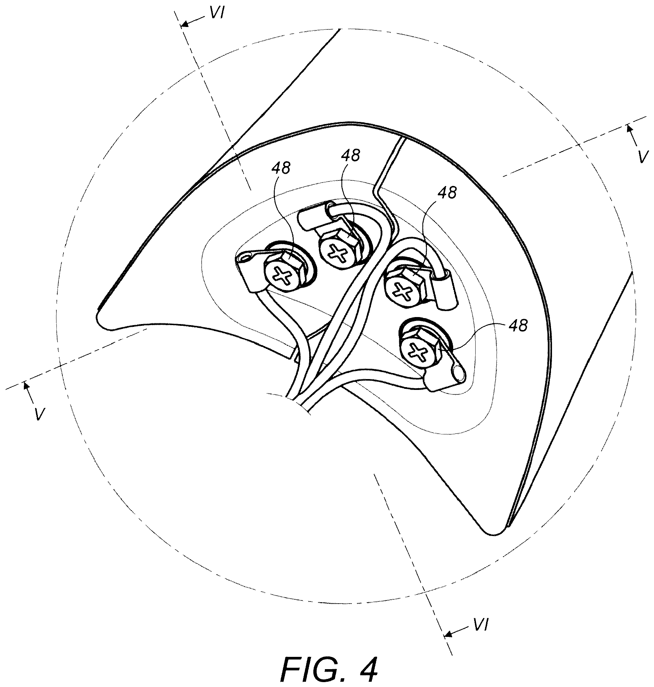

Figure 4 shows a view of the bottom of the blade of Figure 1 in the direction of arrow X in Figure 1;
Figure 5 is a sectional view along line V-V of Figure 4;
Figure 6 is a sectional view along line VI-VI of Figure 4;
Figure 7 illustrates schematically the electrical connections to the heating elements of the heater parts;
Figure 8 is a schematic section through one heater part construction; and
Figure 9 is a schematic section through an alternative heater part construction.

### DETAILED DESCRIPTION

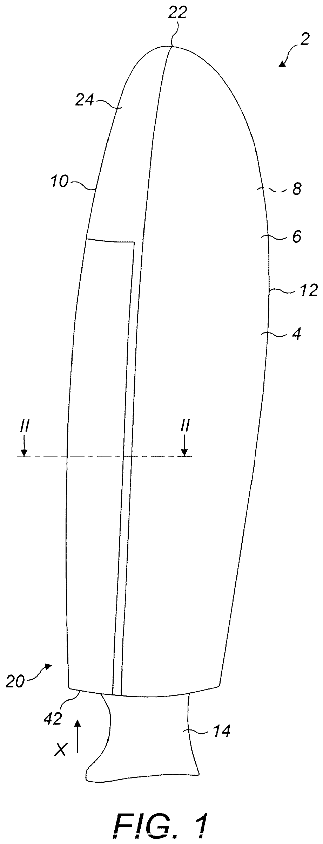

Figure 1 shows, schematically, a blade 2 in accordance with the disclosure. In this embodiment, the blade 2 is a propeller blade, although the disclosure is not limited to such and encompasses other types of blade, for example fan blades (for gas turbine engines), rotor blades (including open rotor blades) and wind turbine blades.

The blade 2 of Figure 1 comprises a blade body 4 having a face side 6 and a camber side 8, extending between a leading edge 10 and a trailing edge 12 of the blade body 4. The blade 2 is further provided with a root 14 for attaching the blade 2 to a hub (not shown).

The blade body 4 may be of any suitable construction, for example a composite construction comprising a plurality of fibre-reinforced layers arranged around a blade core. Such constructions are well known to the skilled person and need not therefore be described in detail here.

The blade 2 further comprises a blade de-icer 20 at the leading edge 10 of the blade body 4. In this embodiment, the blade de-icer 20 extends over only a portion of the span of the blade 2 from the root 14 towards a tip 22 of the blade 2. The precise spanwise extent of the blade de-icer 20 will be determined by the particular blade 2 and its expected operating conditions.

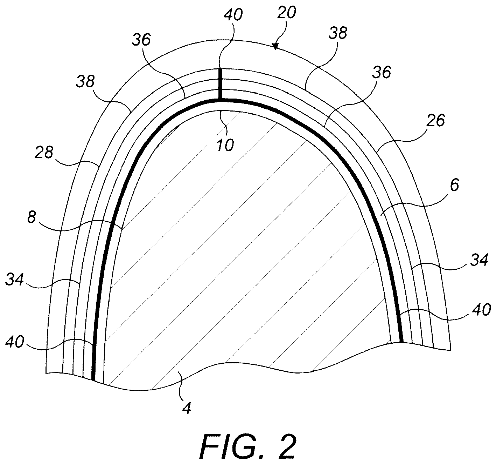

As can be seen from Figures 1 and 2, the blade de-icer 20 only extends over a limited chordwise length of the face and camber sides 6, 8 of the blade body 4 from the leading edge 10. Again, the precise chordwise extent of the blade de-icer 20 will be determined by the particular blade 2 and its operating conditions.

Also provided on the blade 2 is an anti-erosion layer 24. This layer 24 extends over the blade de-icer 20 and around the leading edge 10 of the blade from the blade root 14 to the blade tip 22 to protect the blade 2 and the de-icer 20 from damage due to airborne particles such as sand and from other foreign objects. The anti-erosion layer 24 may be of any suitable construction, for example a layer of polyurethane or a thermoplastic material as is known in the art. The anti-erosion layer 24 completely covers the blade de-icer 20 on the face and camber sides 6, 8 of the blade body 4 in this embodiment. The anti-erosion layer 24 may act not only to protect the blade de-icer 20 but also diffuse heat over the leading edge 10.

As described so far, in general terms, the blade 2 is conventional. However, as will be described further below, the blade 2 differs from conventional blades 2 by virtue of the construction of the blade de-icer 20. In conventional blades 2, the blade de-icer 20 is formed as a single piece heater that is attached to the leading edge 10 of the blade 2. In a blade in accordance with disclosure, however, the blade de-icer 20 is formed as a heater having a first heater part 26 that is bonded to the external surface of the face side 6 of the blade body 4 and a separate second heater part 28 that is bonded to the external surface of the camber side 8 of the blade body 4.

As can be seen in Figure 2, for example, the first and second heater parts 26, 28 are both elongate elements extending from a base end 30 to a tip end 32. Each heater part 26, 28 comprises an electric heating element 34 that is sandwiched between inner and outer layers 36, 38 of the heater part 26, 28. The composition of the inner and outer layers 36, 38 and indeed the construction of the heating element 34 may vary from embodiment to embodiment, and particular non-limiting examples of constructions will be described in further detail below.

As can be seen from Figure 2, the first heater part 26 and second heater part 28 are located on the leading edge 10 of the blade body 4 and are attached thereto by a layer 40 of adhesive. The adhesive may be of any suitable type, such that the temperature of the heater does not weaken or compromise the bonding of the heater parts 26, 28 to the blade body. In certain embodiments, the adhesive may be a thermoplastic adhesive, to facilitate the removal and replacement of a heater part 26, 28. In that event, the melting temperature of the adhesive should be sufficiently above the operating temperature of the heater 2 to avoid problems with weakening or melting of the adhesive bond.

In this embodiment, the first and second heater parts 26, 28 abut or substantially one another at the leading edge 10. The layer 40 of adhesive may, as shown extend between the opposed edges of the heater parts 26, 28 to fill any gap formed between those opposed edges, thereby avoiding a discontinuity in the leading edge of the blade 2 at the junction of the heater parts 26, 28 and also to secure the edges of the heater parts 26, 28 to one another.

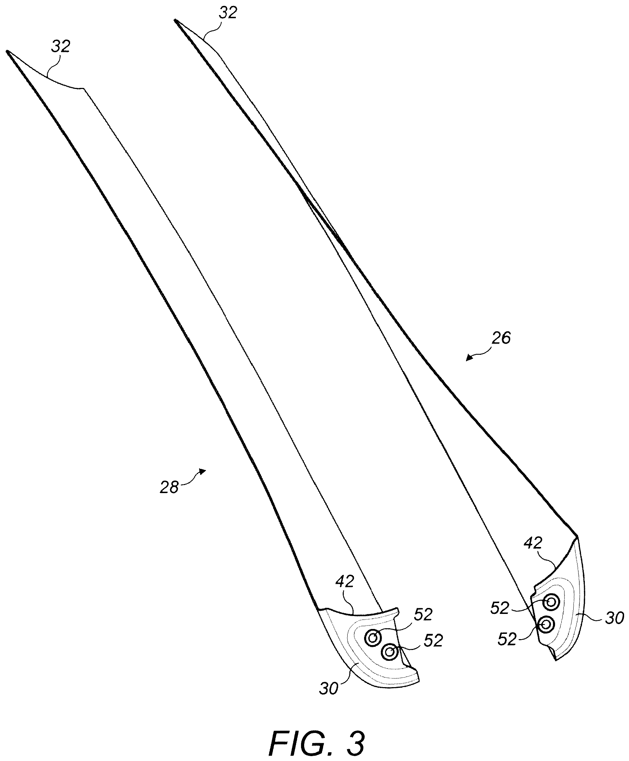

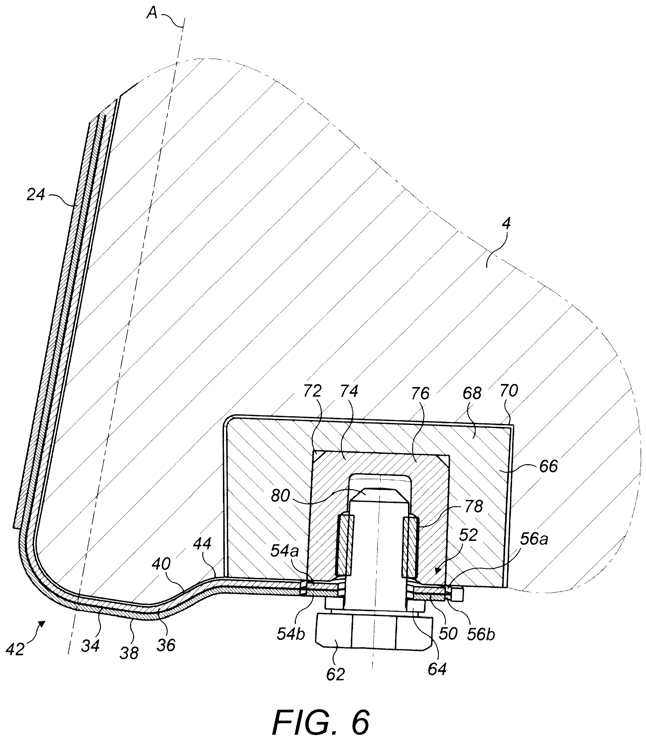

As can be seen in Figures 3 and 6 for example, each heater part 26, 28 is formed with a flange 42 at its base end 30. The flange 42 is angled inwardly relative to a longitudinal axis A of the respective heater part 26, 28. In this example, the flange 42 is arranged at an angle of approximately 80° to 90° relative to the axis A. The particular angle of the flange 42 will be determined by the configuration of the blade 2, as the flange 42 is intended to engage a radially inwardly facing surface 44 formed at the root end of the blade body 4. This surface 44 is commonly referred to as a butt face of the blade 2.

As can be seen from Figure 6, the heating element 34 of the heater part 26, 28 extends from a main section 46 of the heater part 26, 28 that extends along the blade leading edge 10 into the flange 42. Electrical connections 48 are made to the heater parts 26, 28 at the flange 42, as will be described further below.

Each heating element 34 has a terminal portion 50 through which electrical energy is supplied to the heating element 34. An electrical terminal 52 is formed at the terminal portion 50 of the heater element 34. As the heater element 34 may be relatively thin (for example 50 microns in thickness) and therefore not that robust, the electrical terminal 52 is formed with a pair of electrically conductive washers 54a, 54b. A first washer 54a is attached, for example bonded by an electrically conductive adhesive, to a first side of the heating element 34. A second washer 54b is attached, for example bonded by an electrically conductive adhesive, to a second, opposed side of the heating element 34. An opening 56 is formed in the terminal portion 50 of the heating element 34 in alignment with the openings in the washers 54a, 54b. The washers 54a, 54b may reinforce the terminal portion 50 of the heating element 34 making it less susceptible to damage during installation of the heater parts 24, 26 on the blade body 4. They may also resist turning of the terminal portions 50 of the heating element 34 when an electrical connection is made thereto, as will be discussed further below.

The washers 54a, 54b are received within openings 56a, 56b in the inner and outer layers 36, 38 of the heater part 26, 28. The washers 54a, 54b may be completely received within the thickness of the inner and outer layers 36, 38 and may not protrude therefrom. As illustrated, in some embodiments, the washers 54a, 54b may have substantially the same thickness as the inner/outer layers 36, 38 so as to lie substantially flush with the external surfaces thereof. However, in other embodiments, the washers 54a, 54b may protrude from the inner/outer layers 36, 38. Typically the washers may have a thickness of 0.5 mm.

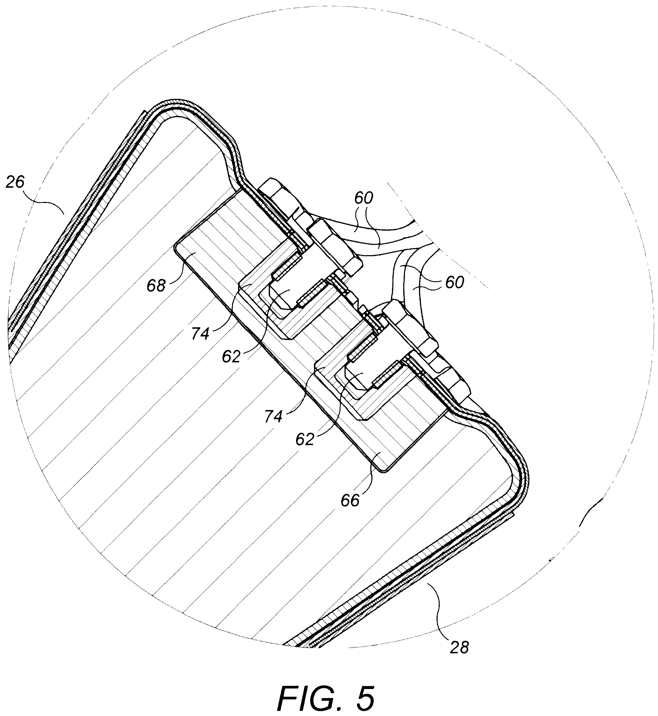

As can be seen from Figures 5 and 6, electrical leads 60 are attached to the terminal portions 50 of the respective heating elements 34 by fasteners 62, for example bolts or screws 62. The electrical leads 60 have suitable blade connectors 64 for receiving the fastener 62. The fasteners 62 are received in a terminal block 66 provided in the root end of the blade body 4. Separate terminal blocks 66 may be provided for each fastener 62, but in the described embodiment and advantageously from the point of ease of construction, a common terminal block 66 to receive multiple, in this case all the fasteners 62.

The terminal block 66 comprises a base part 68 that is arranged in a recess 70 in the root end of the blade body 4. The base part 68 may be of an electrically insulating material such as a plastics material. The base part 68 may be fitted into the recess 70 during the manufacture of the blade body 4, or fitted therein after the manufacture of the blade body 4.

The base part 68 has a plurality of (in this embodiment four) recesses 72, each recess 72 receiving a fastener receiver 74. The fastener receiver 74 may be a push fit within the recess 72 or be adhesively secured therein. The fastener receiver 74 comprises a body 76, for example a moulded plastics body 76, which comprises a threaded insert 78. The threaded insert receives the threaded end 80 of the respective fastener 62. In some embodiments, the body 76 may be provided with a threaded portion rather than with a threaded insert 78.

The fastener receivers 74 will be visible on the radially inner surface 44 of the blade body 4 and will align with the washers 54a, 54b attached to the heater elements 34 when the heater parts 26, 28 are mounted to the blade body 4 to receive the fasteners 62.

The illustrated arrangement provides a robust mounting for the electrical connections to the heater parts 26, 28 and to the blade body 4. When the fastener is screwed into the receiver 74, the connectors 64 will clamp against the washers 54a, rather than the heater element 34 itself, reducing the likelihood of damage to the heating element by crushing or tearing through turning.

While the fastener 62 in this embodiment has been illustrated as being a screw fastener 62 received in a threaded insert 78, other forms of fastener 62 may be used. For example the fastener 62 may comprise a stud received in the threaded insert 78, and the electrical connectors 64 be fastened in position by a nut threaded onto the stud. In a yet further arrangement, a stud may be moulded into the fastener receiver 74 or into the base part 68 directly to receive a nut.

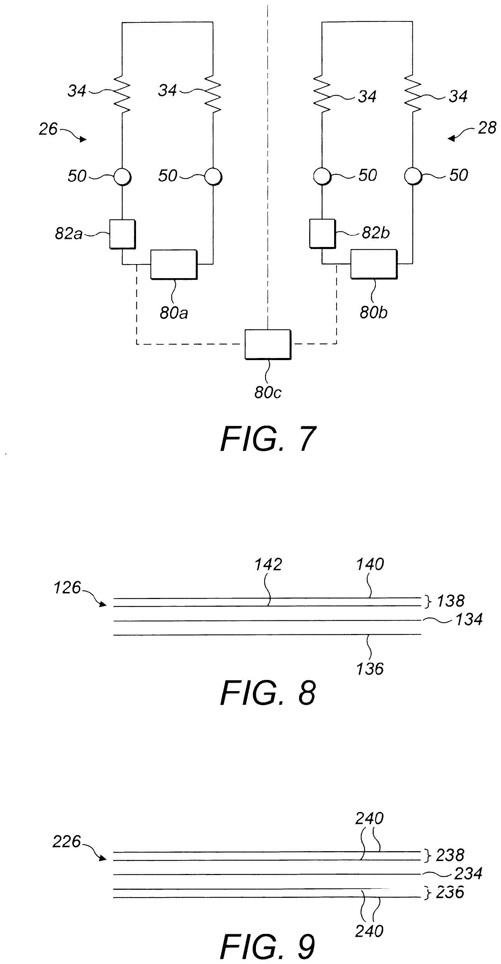

Turning now to the control of the blade de-icer 20, Figure 7 illustrates schematically, a blade heating system. The heating system comprises a power supply 80a, 80b attached to the terminal portions 50 of the respective heating elements 34 of the first and second heater parts 26, 28. Although shown separately, the power supplies 80a, 80b may be a common power supply 80c. A separate control 82a, 82b is also provided for each heater part 26, 28.

The advantage of providing a separate power supply 80a, 80b (or a power supply 80c supplying the heater parts in parallel rather than in series) is that should the heater element 34 of one of the heater parts 26, 28 be damaged, power can still be supplied to the other heater part 26, 28 thereby providing at least some heating to the leading edge of the blade 2. In some embodiments, should power be disconnected to just one heater part 26, 28, in order to avoid possible out of balance problems in a rotor comprising multiple blades, power may be disconnected to a blade on the opposite side of the rotor.

In addition, the advantage of providing a separate control 82a, 82b for each heater part 26, 28 is that each heater part 26, 28 may be controlled independently of the other. This allows the heating regime applied to either side of the blade 2 to be tailored to specific needs. For example, the power supply to the respective heater parts 26, 28 may be controlled so as to optimise the heating time on each side of the blade 2 so as to minimise energy requirements.

Returning now to the construction of the heater parts 26, 28, the lay-up of the heater parts 26, 28 has been described in broad terms above, with a heating element 34 being sandwiched between inner and outer layers 36, 38. Some exemplary heater part lay-ups will now be described with reference to Figures 8 and 9.

With reference to Figure 8, in one embodiment, a heater part 126 comprises an elastomeric inner layer 136 for example of nitrile rubber, polychloroprene or the like. The heater part 126 further comprises an outer layer 138 which is itself made up from an elastomeric layer 140 for example of nitrile rubber, polychloroprene or the like and a reinforcement layer 142, for example of a fabric such as fiberglass. A heating element 134 is sandwiched between the inner and outer layers 136, 138. The heating element 134 may be a metallic or other conductive element such as a foil, for example of stainless steel or copper, carbon or other conductive wires, or an electrically conductive paint. The various layers may be laid up and bonded together using a technique as discussed above, for example using impregnation of fibres with resin, autoclaving and so on.

In another embodiment, illustrated in Figure 9, a heating part 226 comprises an inner layer 236 and an outer layer 238. The inner and outer layer 236, 238 are in this embodiment made up from multiple layers, for example two layers 240, of a composite material, such as a fiberglass or aramid material. The material and the number of plies of material making up the inner and outer layers 236, 238 may be the same or different and may be chosen to suit the particular installation. The materials of the A heating element 234 is sandwiched between the inner and outer layers 236, 238. The heating element 234 may have a similar construction to that in the previous embodiment. The various layers may be laid up and bonded together using a technique as discussed above.

Having described the structure of the blade 2 above, an exemplary method of manufacture will now be described.

A blade body 4, including the terminal block 66, the first heater part 26 and the second heater part 28 are manufactured separately. The blade body 4 may be made by any suitable method, as would be known to the skilled person.

The first and second heater parts 26, 28 may be manufactured using a mould and counter-mould technique or a mould and vacuum bag technique. In the former technique, component layers of the heater parts 26, 28 are built up in a mould and a counter-mould then placed over the deposited layers to shape the layers to the appropriate shape. Depending on the materials used, the mould may be heated to cure the layers. In the latter technique, component layers of the heater parts 26, 28 are built up in a mould and a vacuum bag then placed over the mould and deposited layers and a vacuum drawn to force the layers into the mould and take up the shape of the mould. The assembly may be placed in an autoclave for example to cure the deposited layers.

Whichever technique is used, making the de-icer 20 in two separate parts 26, 28, for attachment to opposed faces of a blade body 4, facilitates the construction as the parts 26, 28 do not need to have such a complicated geometry as the previously one-piece heaters. They may therefore be more accurately produced and potentially lead to less scrap being generated during the manufacturing process. The process is therefore more repeatable that with previous constructions, and even if a part should have to be scrapped for whatever reason, it will be a lesser value part than previously.

The first and second heater parts 26, 28 are then adhesively bonded to the external surface of the blade body 4 at the leading edge thereof, on the face and camber sides 6, 8 thereof respectively. The blade body 4 and the heater parts 26, 28 may be prepared for bonding by any suitable technique, for example cleaning and surface preparation.

A suitable adhesive may then be applied to either or both of the blade body 4 and the heater parts 26, 28. Depending on the adhesive used, the adhesive could be pre-applied to either the blade body 4 or the heater parts 26, 28. Suitable adhesives include epoxy adhesives and polyurethane adhesives. In some embodiments, as discussed above, a thermoplastic adhesive may be used as this may facilitate removal of the heater parts 26, 28 should they need repair or replacement. The heater parts 26, 28 may be suitably clamped to the blade body 4 to assist in forming a successful bond and depending on the adhesive used, the assembly may be heated to cure the bond.

After attachment of the heater parts 26, 28, the anti-erosion layer 24 may be applied over the heater parts 26, 28. The anti-erosion layer 24 may be adhesively secured to the blade 2. In some embodiments, the anti-erosion layer 24 may be a sheet, which is self-adhesive. In other embodiments, an adhesive may be applied between the anti-erosion layer 24 and the blade 2, for example on opposed surfaces of both.

The described technique of providing a leading edge blade de-icer is advantageous for the various reasons given above. In addition, by providing two separate heater parts 26, 28, should one part become damaged that part can be removed and replaced, avoiding the need to replace the whole heater, which is clearly advantageous in terms of repair time and costs.

## Claims

1. A blade (2) comprising a blade body (4) and a blade de-icer (20) located on the leading edge (10) of the blade body (4), wherein the blade de-icer (20) comprises:
a first heater part (26) bonded to an external surface of a face side (6) of the blade body (4); and
a separate second heater part (28) bonded to an external surface of a camber side (8) of the blade body (4), wherein each heater part (26, 28) comprises an electrical heating element (34) arranged therein sandwiched between an inner layer (36) and an outer layer (38) of the heater part (26, 28), **characterised in that** the first and second heater parts (26, 28) each have an electrical input terminal (52) and an output terminal (52) at a base end (30) of the respective first and second heater parts (26, 28), wherein each of the first and second heater parts (26, 28) comprises a flange (42) at its base end (30), the flange (42) being angled, for example at an angle of 90°, relative to a longitudinal axis (A) of the heater part (26, 28) whereby the flange (42) is configured to overlie a radially inwardly facing surface (44) formed at a root end of the blade body (4).

2. A blade as claimed in claim 1, wherein the input and output terminals (52) each comprise a pair of washers (54a, 54b), one washer (54a) engaging a first side of a terminal portion (50) of the heating element (34) and the other washer (54b) engaging an opposed second side of the terminal portion (50) of the heating element (34).

3. A blade as claimed in claim 2, wherein the washers (54a, 54b) are received in openings (56a, 56b) provided in the inner and outer layers (36, 38) of the heater part (26, 28).

4. A blade as claimed in claim 2 or 3, wherein the washers (54a, 54b) do not protrude from the inner and outer layers (36, 38).

5. A blade as claimed in claim 4, wherein the washers (54a, 54b) are lying flush with the external surfaces of the inner and outer layers (36, 38).

6. A blade as claimed in any of claims 2 to 5, further comprising a terminal block (66) provided in the blade body (4) for receiving fasteners (62) extending through the washers (54a, 54b).

7. A blade as claimed in claim 6, wherein the terminal block (66) comprises one or more fastener receivers (74) having a threaded bore for receiving the fastener (62).

8. A blade as claimed in claim 7, wherein the threaded bore is provided in a threaded insert (78) mounted in the fastener receiver (74).

9. A blade as claimed in any preceding claim, further comprising an erosion resistant layer (24) arranged over the first and second heater parts (26, 28) on the leading edge (10) of the blade body (4).

10. A blade as claimed in any preceding claim, wherein the blade (2) is a propeller blade, a propulsor blade, a fan blade, and open rotor blade or a wind turbine blade.

11. A blade as claimed in any preceding claim, wherein the inner and outer layers (36, 136) of the heater part (26, 28) comprise a fibre reinforced composite material or an elastomeric material with a reinforcing backing.

12. A blade heating system comprising a blade as claimed in any preceding claim and an electrical power supply (80) connected to the first and second heater parts (26, 28), the power supply (80) being configured such that one heater part (26) may be energised independently of the other heater part (28).

13. A blade heating system as claimed in claim 12, further comprising a control (82) configured such that the electrical power supply to each heater part (26, 28) may be controlled independently.

14. A method of constructing a blade as claimed in any of claims 1 to 11 comprising:
bonding the first heater part (26) to an external surface of a leading edge portion of the camber side (8) of the blade body (4); and
bonding the second heater part (28) to an external surface of a leading edge portion of the face side (6) of the blade body (4).

## Patentansprüche

1. Schaufel (2), umfassend einen Schaufelkörper (4) und einen Schaufelenteiser (20), der sich an der Vorderkante (10) des Schaufelkörpers (4) befindet, wobei der Schaufelenteiser (20) Folgendes umfasst:
ein erstes Heizungsteil (26), das an eine Außenfläche einer Stirnseite (6) des Schaufelkörpers (4) gebunden ist; und
ein separates zweites Heizungsteil (28), das an eine Außenfläche einer Wölbungsseite (8) des Schaufelkörpers (4) gebunden ist,
wobei jedes Heizungsteil (26, 28) ein elektrisches Heizelement (34) umfasst, das darin zwischen einer inneren Schicht (36) und einer äußeren Schicht (38) des Heizungsteils (26, 28) angeordnet ist, **dadurch gekennzeichnet, dass** das erste und zweite Heizungsteil (26, 28) jeweils einen elektrischen Eingangsanschluss (52) und einen Ausgangsanschluss (52) an einem Basisende (30) des jeweiligen ersten und zweiten Heizungsteils (26, 28) aufweisen, wobei jedes des ersten und zweiten Heizungsteils (26, 28) an seinem Basisende (30) einen Flansch (42) umfasst, wobei der Flansch (42) relativ zu einer Längsachse (A) des Heizungsteils (26, 28) abgewinkelt ist, zum Beispiel in einem Winkel von 90°, wodurch der Flansch (42) so konfiguriert ist, dass er über einer radial nach innen gewandten Fläche (44) liegt, die an einem Fußende des Schaufelkörpers (4) ausgebildet ist.

2. Schaufel nach Anspruch 1, wobei die Eingangs- und Ausgangsanschlüsse (52) jeweils ein Paar Unterlegscheiben (54a, 54b) umfassen, wobei eine Unterlegscheibe (54a) eine erste Seite eines Anschlussabschnitts (50) des Heizelements (34) in Eingriff nimmt und die andere Unterlegscheibe (54b) eine gegenüberliegende zweite Seite des Anschlussabschnitts (50) des Heizelements (34) in Eingriff nimmt.

3. Schaufel nach Anspruch 2, wobei die Unterlegscheiben (54a, 54b) in Öffnungen (56a, 56b) aufgenommen sind, die in der inneren und äußeren Schicht (36, 38) des Heizungsteils (26, 28) bereitgestellt sind.

4. Schaufel nach Anspruch 2 oder 3, wobei die Unterlegscheiben (54a, 54b) nicht von der inneren und äußeren Schicht (36, 38) vorstehen.

5. Schaufel nach Anspruch 4, wobei die Unterlegscheiben (54a, 54b) bündig mit den Außenflächen der inneren und äußeren Schicht (36, 38) liegen.

6. Schaufel nach einem der Ansprüche 2 bis 5, ferner umfassend einen Anschlussblock (66), der in dem Schaufelkörper (4) bereitgestellt ist, um Befestigungselemente (62) aufzunehmen, die sich durch die Unterlegscheiben (54a, 54b) erstrecken.

7. Schaufel nach Anspruch 6, wobei der Anschlussblock (66) eine oder mehrere Befestigungselementaufnahmen (74) umfasst, die eine Gewindebohrung zum Aufnehmen des Befestigungselements (62) aufweisen.

8. Schaufel nach Anspruch 7, wobei die Gewindebohrung in einem Gewindeeinsatz (78) bereitgestellt ist, der in der Befestigungselementaufnahme (74) montiert ist.

9. Schaufel nach einem der vorhergehenden Ansprüche, ferner umfassend eine erosionsbeständige Schicht (24), die über dem ersten und zweiten Heizungsteil (26, 28) an der Vorderkante (10) des Schaufelkörpers (4) angeordnet ist.

10. Schaufel nach einem der vorhergehenden Ansprüche, wobei die Schaufel (2) eine Propellerschaufel, eine Düsenringpropellerschaufel, eine Lüfterschaufel, eine offene Laufschaufel oder eine Windturbinenschaufel ist.

11. Schaufel nach einem der vorhergehenden Ansprüche, wobei die innere und äußere Schicht (36, 136) des Heizungsteils (26, 28) ein faserverstärktes Verbundmaterial oder ein Elastomermaterial mit einer verstärkenden Rückschicht umfassen.

12. Schaufelheizsystem, umfassend eine Schaufel nach einem der vorhergehenden Ansprüche und eine elektrische Leistungszufuhr (80), die mit dem ersten und zweiten Heizungsteil (26, 28) verbunden ist, wobei die Leistungszufuhr (80) derart konfiguriert ist, dass ein Heizungsteil (26) unabhängig von dem anderen Heizungsteil (28) mit Energie versorgt werden kann.

13. Schaufelheizsystem nach Anspruch 12, ferner umfassend eine Steuerung (82), die derart konfiguriert ist, dass die elektrische Leistungszufuhr zu jedem Heizungsteil (26, 28) unabhängig gesteuert werden kann.

14. Verfahren zum Konstruieren einer Schaufel nach einem der Ansprüche 1 bis 11, umfassend:
Binden des ersten Heizungsteils (26) an eine Außenfläche eines Vorderkantenabschnitts der Wölbungsseite (8) des Schaufelkörpers (4); und
Binden des zweiten Heizungsteils (28) an eine Außenfläche eines Vorderkantenabschnitts der Stirnseite (6) des Schaufelkörpers (4) .

## Revendications

1. Aube (2) comprenant un corps d'aube (4) et un dégivreur d'aube (20) situé sur le bord d'attaque (10) du corps d'aube (4), dans laquelle le dégivreur d'aube (20) comprend :
une première partie chauffante (26) liée à une surface externe d'un côté face (6) du corps d'aube (4) ; et
une seconde partie chauffante séparée (28) liée à une surface externe d'un côté cambré (8) du corps d'aube (4), dans laquelle chaque partie chauffante (26, 28) comprend un élément chauffant électrique (34) disposé à l'intérieur, pris en sandwich entre une couche intérieure (36) et une couche extérieure (38) de la partie chauffante (26, 28), **caractérisée en ce que** les première et seconde parties chauffantes (26, 28) ont chacune une borne d'entrée électrique (52) et une borne de sortie (52) au niveau d'une extrémité de base (30) des première et seconde parties chauffantes respectives (26, 28), dans laquelle chacune des première et seconde parties chauffantes (26, 28) comprend une bride (42) au niveau de son extrémité de base (30), la bride (42) étant inclinée, par exemple selon un angle de 90°, par rapport à un axe longitudinal (A) de la partie chauffante (26, 28), moyennant quoi la bride (42) est conçue pour recouvrir une surface tournée radialement vers l'intérieur (44) formée au niveau d'une emplanture du corps d'aube (4).

2. Aube selon la revendication 1, dans laquelle les bornes d'entrée et de sortie (52) comprennent chacune une paire de rondelles (54a, 54b), une rondelle (54a) venant en prise avec un premier côté d'une partie de borne (50) de l'élément chauffant (34) et l'autre rondelle (54b) venant en prise avec un second côté opposé de la partie de borne (50) de l'élément chauffant (34) .

3. Aube selon la revendication 2, dans laquelle les rondelles (54a, 54b) sont reçues dans des ouvertures (56a, 56b) prévues dans les couches intérieure et extérieure (36, 38) de la partie chauffante (26, 28).

4. Aube selon la revendication 2 ou 3, dans laquelle les rondelles (54a, 54b) ne dépassent pas des couches intérieure et extérieure (36, 38).

5. Aube selon la revendication 4, dans laquelle les rondelles (54a, 54b) affleurent les surfaces externes des couches intérieure et extérieure (36, 38).

6. Aube selon l'une quelconque des revendications 2 à 5, comprenant en outre un bornier (66) prévu dans le corps d'aube (4) pour recevoir des attaches (62) s'étendant à travers les rondelles (54a, 54b).

7. Aube selon la revendication 6, dans laquelle le bornier (66) comprend un ou plusieurs récepteurs d'attache (74) ayant un alésage fileté pour recevoir l'attache (62).

8. Aube selon la revendication 7, dans laquelle l'alésage fileté est prévu dans un insert fileté (78) monté dans le récepteur d'attache (74).

9. Aube selon une quelconque revendication précédente, comprenant en outre une couche résistante à l'érosion (24) disposée sur les première et seconde parties chauffantes (26, 28) sur le bord d'attaque (10) du corps d'aube (4).

10. Aube selon une quelconque revendication précédente, dans laquelle l'aube (2) est une aube d'hélice, une aube de propulseur, une aube de soufflante et une aube de rotor ouvert ou une pale d'éolienne.

11. Aube selon une quelconque revendication précédente, dans laquelle les couches intérieure et extérieure (36, 136) de la partie chauffante (26, 28) comprennent un matériau composite renforcé par des fibres ou un matériau élastomère avec un support de renforcement.

12. Système de chauffage d'aube comprenant une aube selon une quelconque revendication précédente et une alimentation électrique (80) connectée aux première et seconde parties chauffantes (26, 28), l'alimentation électrique (80) étant configurée de telle sorte qu'une partie chauffante (26) peut être alimentée indépendamment de l'autre partie chauffante (28) .

13. Système de chauffage d'aube selon la revendication 12, comprenant en outre une commande (82) conçue de telle sorte que l'alimentation électrique de chaque partie chauffante (26, 28) puisse être commandée indépendamment.

14. Procédé de construction d'une aube selon l'une quelconque des revendications 1 à 11 comprenant :
la liaison de la première partie chauffante (26) à une surface externe d'une partie de bord d'attaque du côté cambré (8) du corps d'aube (4) ; et
la liaison de la seconde partie chauffante (28) à une surface externe d'une partie de bord d'attaque du côté face (6) du corps d'aube (4).
